(19) Europäisches Patentamt
European Patent Office
Office européen des brevets

(11) **EP 3 932 761 A1**

(12) **EUROPEAN PATENT APPLICATION**
published in accordance with Art. 153(4) EPC

(43) Date of publication:
**05.01.2022 Bulletin 2022/01**

(21) Application number: **20773154.8**

(22) Date of filing: **18.03.2020**

(51) Int Cl.:
**B60W 10/20** (2006.01)    **B60W 30/18** (2012.01)

(86) International application number:
**PCT/CN2020/079958**

(87) International publication number:
**WO 2020/187257 (24.09.2020 Gazette 2020/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.03.2019  CN 201910204337**

(71) Applicant: **Great Wall Motor Company Limited Baoding, Hebei 071000 (CN)**

(72) Inventors:
• **GE, Jianyong**
  **Baoding, Hebei 071000 (CN)**
• **ZHANG, Kai**
  **Baoding, Hebei 071000 (CN)**
• **HE, Lin**
  **Baoding, Hebei 071000 (CN)**

• **ZHEN, Longbao**
  **Baoding, Hebei 071000 (CN)**
• **WANG, Tianpei**
  **Baoding, Hebei 071000 (CN)**
• **LU, Ning**
  **Baoding, Hebei 071000 (CN)**
• **GAO, Jian**
  **Baoding, Hebei 071000 (CN)**
• **ZHANG, Jian**
  **Baoding, Hebei 071000 (CN)**
• **LIU, Hongliang**
  **Baoding, Hebei 071000 (CN)**
• **CAO, Zeng**
  **Baoding, Hebei 071000 (CN)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **VEHICLE ABNORMAL LANE CHANGE CONTROL METHOD, DEVICE AND SYSTEM**

(57)    A vehicle abnormal lane change control method, device and system. The vehicle abnormal lane change control method, comprising: obtaining a current transverse state value of an autonomous vehicle and a target line to which the autonomous vehicle is about to move corresponding to the current transverse state value, wherein each transverse state value is preconfigured to correspond to different target lines; determining a desired trajectory of the autonomous vehicle according to the target line; performing preview tracking control on the autonomous vehicle based on the desired trajectory to obtain a target steering wheel angle, wherein the requirements of the target steering wheel angle minimize the error between the actual traveling trajectory and the desired trajectory of the vehicle; and controlling the vehicle to perform abnormal lane change according to the target steering wheel angle. The vehicle abnormal lane change control method has self-adaptability, and enables the autonomous vehicle to cope with different abnormal road conditions, avoiding safety accidents caused by the inability of autonomous vehicle to cope with complex road conditions.

Figure 1

**Description**

**TECHNICAL FIELD**

The present disclosure relates to the technical field of intelligent transportation, and particularly, to a method, device and system for controlling abnormal lane change of a vehicle.

**BACKGROUND**

A autonomous vehicle senses external environment information and information of the vehicle itself through various sensor systems installed around the vehicle body, merges the input information and makes decisions based on the input information (with corresponding merging system and decision system), autonomously plans a safe route according to different driving conditions, and monitors and controls safe driving of the vehicle in real time through a control system, so as to realize highly automated driving of the vehicle. The control system is a core part of the autonomous vehicle, and its performance directly determines the safe driving and automation standards of the vehicle, so it has always been a focus and difficulty of research and development in various companies. The control system is divided into two parts: a lateral control system and a longitudinal control system. The lateral control system mainly realizes real-time steering control of the autonomous vehicle through a series of control algorithms, so that the vehicle can perform abnormal lane change, automatic lane change, dynamic obstacle avoidance, U-turn and turning according to a known planned driving route. The longitudinal control system mainly controls acceleration and deceleration of the vehicle, so that the autonomous vehicle can travel longitudinally at a certain safe driving speed to realize automatic start-stop, follow and cruise. Through coupling of the horizontal and vertical control, the entire control system can realize automatic control of both of the steering and the speed of the vehicle at the same time.

During the driving of the vehicle, functions such as lane keeping and automatic lane changing occupy most of driving time, and cover most common driving conditions, so that the autonomous vehicle can safely drive in accordance with the planned driving route. However, in actual operation of the vehicle, it is also necessary to deal with complex conditions like abnormal lane conditions, such as driving into a target ramp under a forcible cut-in condition, abnormal driving in its own lane, abnormal cross-lane driving in case of an obstacle in front or under a condition of road repair . Therefore, the control system of the autonomous vehicle further needs to be designed with ALC control.

**SUMMARY**

In view of this, a method for controlling abnormal lane change of a vehicle is provided in the present disclosure to solve the problem in dealing with conditions of vehicle abnormal lane changing.

To achieve the above purposes, the technical solutions of the present disclosure are implemented as follows.

A method for controlling abnormal lane change of a vehicle, including: obtaining a current lateral state value of an autonomous vehicle and a target line to which the autonomous vehicle will move according to the current lateral state value, where each lateral state value is pre-configured to correspond to a different target line; determining a desired trajectory for the autonomous vehicle according to the target line; performing preview tracking control on the autonomous vehicle based on the desired trajectory to obtain a target steering wheel angle, the target steering wheel angle is required to minimize an error between an actual driving trajectory of the autonomous vehicle and the desired trajectory; and controlling the autonomous vehicle to perform abnormal lane change according to the target steering wheel angle.

Further, cases that each lateral state value is pre-configured to correspond to a different target line include: when the lateral state value is a first value, the target line is a center line of a current lane; when the lateral state value is a second value, the target line is a center line of a left lane; when the lateral state value is a third value, the target line is a center line of a right lane; when the lateral state value is a fourth value, the target line is a dynamic offset line in the current lane; when the lateral state value is a fifth value, the target line is a cross-lane dynamic offset line; when the lateral state value is a sixth value, the target line is a left safety offset line; and when the lateral state value is a seventh value, the target line is a right safety offset line.

Further, the performing preview tracking control on the autonomous vehicle based on the desired trajectory to obtain the target steering wheel angle includes: determining a preview point; calculating a distance between a point closest to the preview point in the desired trajectory and the preview point, and taking the distance as a preview error; determining a transfer function relationship between the preview error and a steering wheel angle; and calculating the target steering wheel angle corresponding to the current preview error according to the transfer function relationship.

Further, the determining the transfer function relationship between the preview error and the steering wheel angle includes: determining the transfer function relationship between the preview error and the steering wheel angle according to a vehicle dynamics model, a motion law, a preview distance and a speed of the autonomous vehicle.

Further, before controlling the autonomous vehicle to perform abnormal lane change according to the target steering wheel angle, the method for controlling abnormal lane change of the vehicle further includes: obtaining a heading angle deviation between a current heading angle and a target heading angle of the autonomous vehicle; performing proportional-integral-derivative PID calculation on the heading angle deviation to obtain a control increment for the steering wheel angle; and correcting the target steering wheel angle based on the control increment, the corrected target steering wheel angle is required to achieve zero heading angle deviation.

Compared with the prior art, the method for controlling abnormal lane change of the vehicle described in the present disclosure has following advantages: the method for controlling abnormal lane change of the vehicle the present disclosure is adaptive, facilitate the autonomous vehicle to respond to a variety of abnormal road working conditions, cover working conditions more comprehensively, conform to driving scenes, avoid safety accidents caused by inability of autonomous vehicles to cope with the complex working conditions, and meet handling stability and safety requirements of the vehicle.

Another object of the present disclosure is to provide a device for controlling abnormal lane change of a vehicle to solve the problem in dealing with conditions of vehicle abnormal lane changing.

To achieve the above purposes, the technical solutions of the present disclosure are implemented as follows.

A device for controlling abnormal lane change of a vehicle, including: a target line obtaining module configured to obtain a current lateral state value of an autonomous vehicle and a target line to which the autonomous vehicle will move according to the current lateral state value, each lateral state value is pre-configured to correspond to a different target line; a desired trajectory determination module configured to determine a desired trajectory of the autonomous vehicle according to the target line; a steering wheel angle calculation module configured to perform preview tracking control on the autonomous vehicle based on the desired trajectory to obtain a target steering wheel angle, the target steering wheel angle is required to minimize an error between an actual driving trajectory of the autonomous vehicle and the desired trajectory; and a control module configured to control the autonomous vehicle to perform abnormal lane change according to the target steering wheel angle.

Further, cases that each lateral state value is pre-configured to correspond to a different target line include: when the lateral state value is a first value, the target line is a center line of a current lane; when the lateral state value is a second value, the target line is a center line of a left lane; when the lateral state value is a third value, the target line is a center line of a right lane; when the lateral state value is a fourth value, the target line is a dynamic offset line in the current lane; when the lateral state value is a fifth value, the target line is a cross-lane dynamic offset line; when the lateral state value is a sixth value, the target line is a left safety offset line; and when the lateral state value is a seventh value, the target line is a right safety offset line.

Further, the steering wheel angle calculation module includes: a first calculation submodule configured to determine a preview point, calculate a distance between a point closest to the preview point in the desired trajectory and the preview point, and take the distance as a preview error; and a second calculation submodule configured to determine a transfer function relationship between the preview error and a steering wheel angle, and calculate the target steering wheel angle corresponding to the current preview error according to the transfer function relationship.

Further, the second calculation submodule determines the transfer function relationship between the preview error and the steering wheel angle according to a vehicle dynamics model, a motion law, a preview distance and a speed of the autonomous vehicle.

Further, the device for controlling abnormal lane change of the vehicle further includes: a steering wheel angle correction module configured to obtain a heading angle deviation between a current heading angle and a target heading angle of the autonomous vehicle, perform proportional-integral-derivative PID calculation on the heading angle deviation to obtain a control increment for the steering wheel angle, and correct the target steering wheel angle based on the control increment, where the corrected target steering wheel angle is required to achieve zero heading angle deviation.

The aforementioned for controlling abnormal lane change of the vehicle has the same advantages as the aforementioned for controlling abnormal lane change of the vehicle over the prior art, and will not be repeated here.

Another object of the present disclosure is to provide a machine-readable storage medium, a processor, and a system for controlling abnormal lane change of a vehicle, to solve the problem in dealing with conditions of vehicle abnormal lane changing.

To achieve the above purposes, the technical solutions of the present disclosure are realized as follows.

A machine-readable storage medium having instructions stored thereon, where the instructions enable a machine to execute the above method for controlling abnormal lane change of the vehicle.

A processor configured for running a program, where the processor is configured to, when running the program, execute the above method for controlling abnormal lane change of the vehicle.

A system for controlling abnormal lane change of a vehicle, including: a collection device configured to collect lane line information and vehicle surrounding information; and any one of the above devices for controlling abnormal lane change of the vehicle or a processor. The device for controlling abnormal lane change of the vehicle or the processor is configured to obtain the lane line information and the vehicle surrounding information from the collection device, determine whether the autonomous vehicle is in an abnormal lane changing state according to the lane line information and the vehicle surrounding information, and perform control of abnormal lane change of the vehicle according to a determination result.

Further, the processor is configured as the above processor for executing the program, or the processor is configured to execute the instructions stored on the machine-readable storage medium. The machine-readable storage medium, processor, and system for controlling abnormal lane change of the vehicle have the same advantages as the aforementioned method for controlling abnormal lane change of the vehicle over the prior art, and will not be repeated here.

Other features and advantages of the present disclosure will be described in detail in the following specific embodiments.

## BRIEF DESCRIPTION OF THE DRAWINGS

The drawings constituting a part of the present disclosure are used to provide a further understanding of the present disclosure, and the exemplary embodiments and descriptions of the present disclosure are used to explain the present disclosure, and do not constitute an improper limitation of the present disclosure. In the drawings:

Figure 1 is a flow chart of a method for controlling abnormal lane change of a vehicle according to an embodiment of the present disclosure;

Figure 2 is a schematic diagram of a condition for abnormal lane change of the vehicle;

Figure 3 is a flow chart of performing preview tracking control of an autonomous vehicle according to an embodiment of the present disclosure;

Figure 4 is a schematic diagram of a movement of the vehicle along a desired trajectory which is a circular arc with a curvature R;

Figure 5 is a schematic diagram of a heading angle deviation according to an embodiment of the present disclosure;

Figure 6 is a flow chart of performing heading angle deviation control according to an embodiment of the present disclosure;

Figure 7 is a structure diagram of a device for controlling abnormal lane change of a vehicle according to an embodiment of the present disclosure;

Figure 8 is a structure diagram of a system for controlling abnormal lane change of a vehicle according to an embodiment of the present disclosure; and

Figure 9 is a schematic diagram of communication in the system for controlling abnormal lane change of the vehicle according to an embodiment of the present disclosure.

Description of the reference number

**[0028]** 100 target line obtaining module; 200 desired trajectory determination module; 300 steering wheel angle calculation module; 400 control module; 500 steering wheel angle correction module; 810 collection device; 820 processor

## DETAILED DESCRIPTION

It should be noted that the embodiments in the present disclosure and the features in the embodiments can be combined with each other if there is no conflict.

Hereinafter, the present disclosure will be described in detail with reference to the drawings and in conjunction with the embodiments.

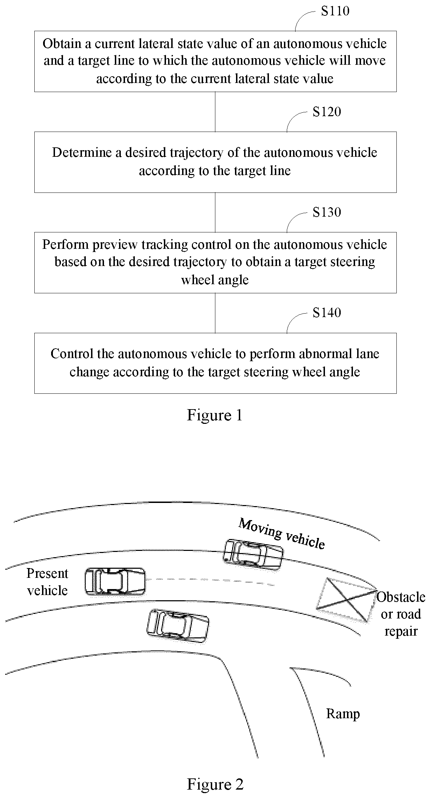

Figure 1 is a flow chart of a method for controlling abnormal lane change of a vehicle according to an embodiment of the present disclosure. The method is applied to a control system of an autonomous vehicle. Figure 2 is a schematic diagram of a condition for abnormal lane change (ALC) of the vehicle. It can be seen that ALC includes conditions of driving into a target ramp under a forcible cut-in condition, abnormal driving in its own lane, abnormal cross-lane driving in case of an obstacle in front or under a condition of road repair.

Referring to Figure 1, the method for controlling abnormal lane change of the vehicle may include following steps S110 to S140.

In step S110, a current lateral state value of an autonomous vehicle and a target line, to which the autonomous vehicle will move according to the current lateral state value, are obtained.

Different lateral state values are used to show different lateral states. For example, it can be defined that when the lateral state value is 0, the vehicle is in a lane keeping state. In addition, referring to the background of the present disclosure, the lateral state value is output by the decision system of the autonomous vehicle, and the control system of the autonomous vehicle can complete a corresponding action according to the lateral state value output by the decision system of the vehicle.

Each lateral state value is pre-configured to correspond to a different target line. For example, when the lateral state value is a first value, the target line is a center line of a current lane; when the lateral state value is a second value, the target line is a center line of a left lane; when the lateral state value is a third value, the target line is a center line of a right lane; when the lateral state value is a fourth value, the target line is a dynamic offset line in the current lane; when the lateral state value is a fifth value, the target line is a cross-lane dynamic offset line; when the lateral state value is a sixth value, the target line is a left safety offset line; and when the lateral state value is a seventh value, the target line is a right safety offset line.

The first to the seventh values are different and can be set arbitrarily, which are not limited in the embodiment of the present disclosure. For example, Table 1 gives an example of the first to seventh values and their correspondence with the target lines.

Table 1. Correspondence between the lateral state value and the target line

| lateral state value: lateral state | target line |
| --- | --- |
| 0: keep in lane | center line of the current lane |
| 1: left lane change | center line of the left lane |
| -1: right lane change | center line of the right lane |
| 2: abnormal in lane | dynamic offset line in the current lane |
| 3: abnormal cross-lane | cross-lane dynamic offset line |
| 4: left safety offset | left safety offset line |
| -4: right safety offset | right safety offset line |

According to Table 1, when the lateral state value of the decision system of the autonomous vehicle is 2, 3, 4, or -4, it indicates that the vehicle is in a state of abnormal lane change. The corresponding target line should be selected according to a rule defined in Table 1 to control the vehicle move to the selected target line to complete adaptive ALC control.

In step S120, a desired trajectory of the autonomous vehicle is determined according to the target line.

According to current lane line information and environment information of the vehicle, it is easy to determine the desired trajectory of the vehicle when its current lateral state and target line are known. For example, in combination with Table 1 and Figure 2, when there is an obstacle in the vehicle's current lane, and the current lateral state indicates abnormality in the current lane, and the target line is the dynamic offset line in the current lane, it is easy to determine a desired trajectory that the vehicle offsets from the center line of the current lane to the target line.

In step S130, preview tracking control is performed on the autonomous vehicle based on the desired trajectory to obtain a target steering wheel angle.

The target steering wheel angle is required to minimize an error between an actual driving trajectory of the autonomous vehicle and the desired trajectory.

The preview tracking control is based on a preview follow theory. In the preview follow theory, the vehicle and a driver form a closed-loop system. The driver looks at future before taking action when driving, commonly referred to as a "preview" function, which is a characteristic of a system that performs following based on future information.

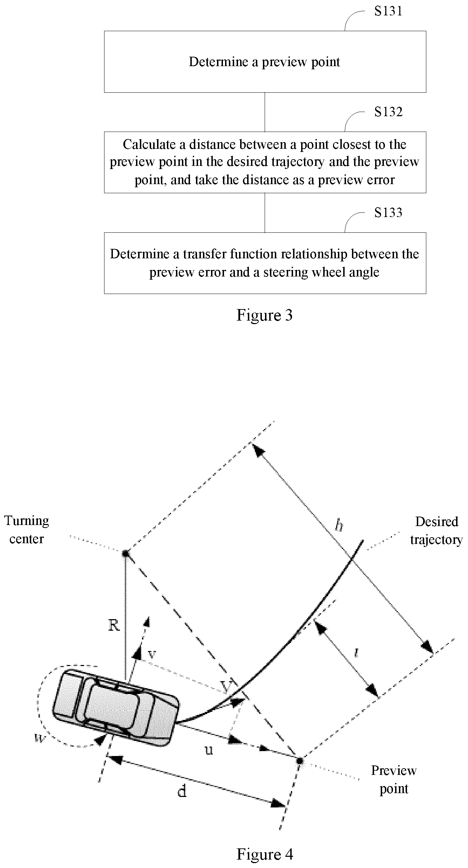

Figure 3 is a flow chart of performing preview tracking control of the autonomous vehicle according to an embodiment of the present disclosure. As illustrated in Figure 3, step S130 may further include following steps S131 to S133.

In step S131, a preview point is determined.

When driving, the driver often pays attention to a distance in front of a driving direction of the vehicle in order to grasp a next position of the vehicle. The distance from the current position to the next position selected by the driver is a preview distance, and the corresponding next position is the preview point. In the embodiment of the present disclosure, after the desired trajectory and a longitudinal speed of the vehicle are obtained, information of road ahead can be estimated to preview along the driving direction of the vehicle, the reasonable preview distance can be selected according to the current vehicle state, and the preview point can be determined accordingly.

In step S132, a distance between a point closest to the preview point in the desired trajectory and the preview point is calculated, and the distance is taken as a preview error.

In step S133, a transfer function relationship between the preview error and a steering wheel angle is determined.

In an embodiment, in order to minimize the error between the actual driving trajectory of the autonomous vehicle and the desired trajectory, the transfer function relationship between the preview error and the steering wheel angle can be determined according to a vehicle dynamics model, a motion law, a preview distance and a speed of the autonomous vehicle.

Specifically, Figure 4 is a schematic diagram of a movement of the vehicle along the desired trajectory which is a circular arc with a curvature R. In the figure, d is the preview distance, 1 is the preview error, h is a distance from the preview point to a center of the curve, R is a radius of curvature of the desired trajectory, w is a yaw velocity, u is the longitudinal speed of the vehicle, and v is the lateral speed. In conjunction with Figure 4, the embodiment of the present disclosure adopts a two-degree-of-freedom vehicle dynamics model, ignoring effects of a steering system and suspension, assuming that a displacement around z-axis, a pitch angle around y-axis, and a roll angle around x-axis of the vehicle are all zero, and a forward speed of the vehicle along the x-axis is regarded as constant. Therefore, the vehicle includes two degrees of freedom: lateral and yaw, and Kinetic differential equation of the vehicle is as follows:

$$\left(K_{af} + K_{ar}\right)\frac{v}{u} + \frac{1}{u}\left(aK_{af} + bK_{ar}\right)w - K_{af}\delta = m(\dot{v} + uw) \tag{1}$$

$$\left(aK_{af} - bK_{ar}\right)\frac{v}{u} + \frac{1}{u}\left(a^2K_{af} + b^2K_{ar}\right)w - aK_{af}\delta = I_z\dot{w} \tag{2}$$

In the equation, $\delta$ is a front wheel angle, $I_z$ is moment of inertia of the vehicle around the z axis, m is mass of the vehicle, a is a distance from a center of mass of the vehicle to a front axle, b is a distance from the center of mass of the vehicle to a rear axle, and $K_{af}$ is a lateral stiffness of front wheel; $K_{ar}$ is a lateral stiffness of rear wheel.

Assuming that the vehicle travels in a steady state along the desired curve, and the following error is zero, in the steady state, $\dot{v} = \dot{w} = 0$, according to the above differential equation, a vehicle model equation can be obtained as:

$$-\begin{bmatrix} -\frac{K_{af}+K_{ar}}{m \cdot u} & -u + \frac{b \cdot K_{ar} - a \cdot K_{af}}{m \cdot u} \\ \frac{b \cdot K_{ar} - a \cdot K_{af}}{I_z \cdot u} & -\frac{a^2 \cdot K_{af} + b^2 \cdot K_{ar}}{I_z \cdot u} \end{bmatrix} \cdot \begin{bmatrix} v \\ w \end{bmatrix} = \begin{bmatrix} \frac{K_{af}}{m} \\ \frac{a \cdot K_{af}}{I_z} \end{bmatrix} \cdot \delta \tag{3}$$

According to the above equation, the lateral speed v of the vehicle in the steady state can be expressed as an equation expressed by the yaw velocity w:

$$v = e \cdot w \tag{4}$$

where e is a matrix equation that can be calculated according to equation (3).

According to a law of steady circular motion, following equation can be obtained:

$$V = \sqrt{u^2 + v^2} \tag{5}$$

$$V = R \cdot w \tag{6}$$

In the equation, V is a speed of the circular motion of the vehicle. Due to the complexity of road conditions, the selection of the preview distance has a great impact on the effect of preview following. When the vehicle speed is low, if the preview distance is too large, the information of road ahead cannot be used well; when the vehicle speed is high, if the preview distance is too short, the information of road ahead will be lost. Based on the above situation, the preview distance is selected as:

$$d = \begin{cases} d_0 & , \; u/3.6 < 2.7 \\ K * u/3.6 & , \; u/3.6 \geq 2.7 \end{cases} \qquad (7)$$

In the equation, K is a preview coefficient, u is the longitudinal speed of the vehicle (in km/h), $d_0$ is a fixed preview distance, which is generally 4 meters according to road test experience, and 3.6 is a relevant conversion parameter.

In addition, in conjunction with Figure 4, the corresponding relationship between the preview distance d and the preview error 1 in the figure can be obtained, and there is a mapping relationship between the front wheel angle $\delta$, the steering wheel angle $\varphi$, and a steering system gear ratio $G_i$ of the vehicle:

$$\varphi = G_i * \delta \qquad (8)$$

Finally, according to the above equation and the law of motion, the transfer function between the desired steering wheel angle and the preview error can be expressed as:

$$\frac{\varphi_s}{\iota_s} = \frac{\frac{1}{\sqrt{R^2 - e^2}}\left(a + b - \frac{m \cdot u^2\left(a \cdot K_{af} - b \cdot K_{ar}\right)}{(a+b) \cdot K_{af} \cdot K_{ar}}\right) \cdot G_i}{\sqrt{d^2 + R^2 + 2 \cdot d \cdot e} - R} \qquad (9)$$

In step S134, the target steering wheel angle corresponding to the current preview error is calculated according to the transfer function relationship.

For example, based on equation (9), after obtaining the current preview error, the corresponding target steering wheel angle can be calculated.

In other embodiments of the present disclosure, the target steering wheel angle may alternatively be obtained according to a curvature of road previewed for the vehicle, which specifically includes the following steps.

Firstly, when the current preview distance d and the current lane line equation $y = c0 + c1*x + c2x^2 + c3x^3$ are known, the curvature p of currently previewed road can be calculated by the following equation:

$$\rho = a1*c3*s + a2*c2 \qquad (10)$$

In the equation, a1 and a2 are conventional parameters, taking values of such as 6 and 2, respectively, (x, y) represent lane line coordinates, c0-c3 represent undetermined parameters, and different parameter values represent different types of roads. When c2 and c3 take value of 0, it means a straight road. The values of c0-c3 can be extracted in lane line fitting.

Secondly, according to Ackerman steering principle, let L be a wheelbase, when the vehicle is turning at a low speed, a turning radius R of the vehicle is only related to the front wheel angle $\delta$, which satisfies the Ackerman steering principle. For the sake of description, the four-wheeled vehicle model is simplified to a two-wheeled model, that is, when the vehicle turns, angles of inner and outer wheels are equal, thus following equation can be obtained according to a geometric relationship of L, R and $\delta$:

$$\tan(\delta) = \frac{L}{R} \qquad (11)$$

referring again to equation (8), there is the mapping relationship between the front wheel angle $\delta$, the steering wheel angle $\varphi$, and the steering system gear ratio $G_i$ of the vehicle, and the curvature of the previewed road is $\rho = 1/R$, so that a mapping relationship between the target steering wheel angle $\sigma$ and the curvature $\rho$ of the previewed road is:

$$\sigma = \arctan(L.\rho) * G_i \qquad (12)$$

Accordingly, the target steering wheel angle can be obtained.

In step S140, the autonomous vehicle is controlled to perform abnormal lane change according to the target steering wheel angle.

For example, a steering wheel angle instruction can be generated according to the target steering wheel angle, and the steering wheel angle instruction can be sent to a steering wheel controller. The steering wheel controller receives the steering wheel angle instruction and parses out the corresponding target steering wheel angle, and accordingly adjusts an angle and direction in which the steering wheel rotates, so that the autonomous vehicle can safely and stably drive to the target line.

The transfer function based on the preview error and the steering wheel angle is established above, so as to realize feedforward control of the steering wheel angle. But in a process of lateral control, due to model errors and various external interferences, it is difficult to guarantee good control effect and stability with feedforward control only. Therefore, the method for controlling abnormal lane change of the vehicle according to the embodiments of the present disclosure further includes feedback control based on heading angle deviation.

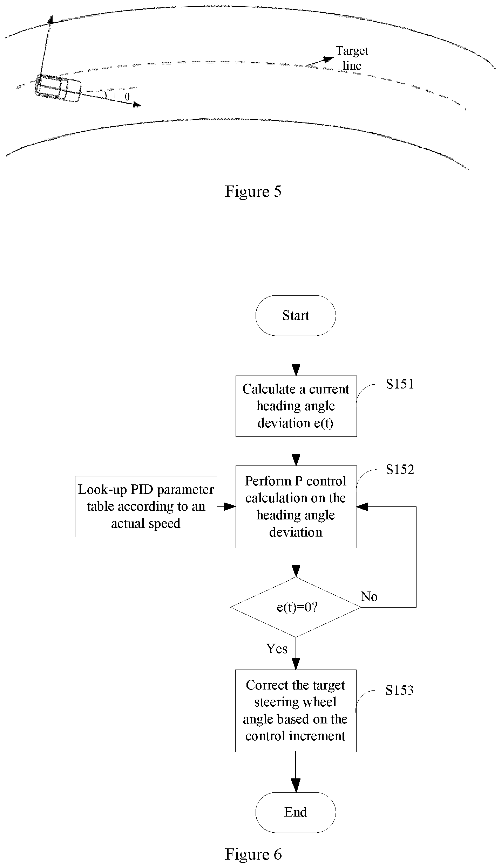

Figure 5 is a schematic diagram of a heading angle deviation according to an embodiment of the present disclosure. It can be seen that the heading angle refers to an angle between the current heading direction of the vehicle and the lane line where the vehicle is located, and the heading angle deviation θ is an angle deviation between current heading angle and a target heading angle. In a process of path following, the heading angle of the vehicle reflects a tangent direction of a vehicle tracking path. Because the driving direction of the vehicle is always expected to be consistent with a direction of the selected target line, the target heading angle should be 0 degrees. Accordingly, as illustrated in Figure 6, the method for controlling abnormal lane changing of the vehicle according to an embodiment of the present disclosure may further include following steps S151 to S153.

In step S151, a heading angle deviation between a current heading angle and a target heading angle of the autonomous vehicle is obtained.

It is known that the target heading angle is 0 degrees, and the current heading angle is represented by HeadingAngle, then the heading angle deviation e(t)=-HeadingAngle.

In step S152, proportional-integral-derivative PID calculation is performed on the heading angle deviation to obtain a control increment for the steering wheel angle.

In an embodiment, when the lateral state value is 2, 3, 4, or -4 in Table 1, a higher demand for control is put forward in an emergency state. In order to achieve a rapid response of the designed controller, P control can be used only for heading angle deviation of the vehicle. Accordingly, a calculation equation of P control can be expressed as y=kp*e(t), where y represents the control increment, kp is a proportional coefficient of P control, and kp is determined by looking-up in PID parameter table.

The PID parameter table is obtained through calibration and correction of actual vehicle test, and it shows the best kp values corresponding to different vehicle speeds.

In step S153, the target steering wheel angle is corrected based on the control increment. The corrected target steering wheel angle is required to achieve zero heading angle deviation.

Specifically, it is necessary to determine whether the heading angle deviation (e(t)) is 0 before step S153. If e(t) is 0, execute step S153 to correct the target steering wheel angle; otherwise, return to step S152 to adjust the control increment y until the heading angle deviation is 0.

For example, preview tracking control is performed on the preview error to obtain an initial target steering wheel angle y1, and P operation is performed on the heading angle deviation to obtain the control increment y2, then a final target control steering wheel angle can be expressed as y=y1+y2.

Accordingly, by performing P control on the heading angle deviation, it not only ensures that the heading angle deviation is controlled to 0, but also enables a PID controller to achieve a rapid response, and the target steering wheel angle is corrected by the control increment for the heading angle deviation, which is beneficial to reduce influence of model errors and various external disturbances on the control effect.

From the above, the autonomous vehicle may be affected by a variety of complex working conditions and different road scenes during the driving process, and the method for controlling abnormal lane change of the vehicle provided by the embodiments of the present disclosure is adaptive, facilitate the autonomous vehicle to respond to the variety of abnormal road working conditions, cover more working conditions, conform to driving scenes, avoid safety accidents caused by inability of autonomous vehicles to cope with the complex working conditions. Furthermore, for the abnormal road conditions, the method for controlling abnormal lane change of the vehicle according to the embodiments of the present disclosure adaptively selects the corresponding safety offset line, the dynamic target line in the lane, the dynamic target line across the lanes according to the lateral decision state, and controls the vehicle to drive on the target line, thereby ensuring safety of driving and safety of passengers. In addition, the method for controlling abnormal lane change of the vehicle according to the embodiments of the present disclosure has a wide application range, can be applied to autonomous systems on curved roads with different curvatures and straight roads, and meet handling stability and safety requirements of the vehicle.

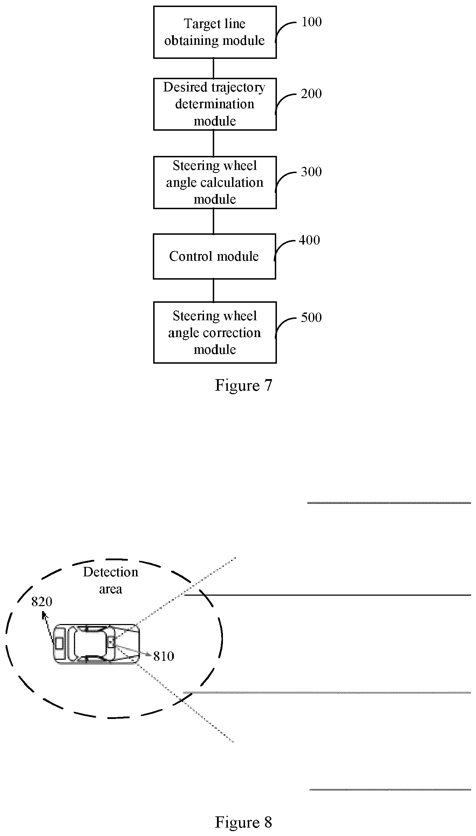

Figure 7 is a structure diagram of a device for controlling abnormal lane change of a vehicle according to an embodiment of the present disclosure. The device for controlling abnormal lane change of the vehicle is based on the same inventive idea as the above-mentioned method for controlling abnormal lane change of the vehicle. As illustrated in Figure 7, the device for controlling abnormal lane change of the vehicle may include: a target line obtaining module 100 configured to obtain a current lateral state value of an autonomous vehicle and a target line to which the autonomous vehicle will move according to the current lateral state value, where each lateral state value is pre-configured to correspond to a different target line; a desired trajectory determination module 200 configured to determine a desired trajectory of the autonomous vehicle according to the target line; a steering wheel angle calculation module 300 configured to perform preview tracking control on the autonomous vehicle based on the desired trajectory to obtain a target steering wheel angle, where the target steering wheel angle is required to minimize an error between an actual driving trajectory of the autonomous vehicle and the desired trajectory; and a control module 400 configured to control the autonomous vehicle to perform abnormal lane change according to the target steering wheel angle.

In a preferable embodiment, each lateral state value is pre-configured to correspond to a different target line, which includes: when the lateral state value is a first value, the target line is a center line of a current lane; when the lateral state value is a second value, the target line is a center line of a left lane; when the lateral state value is a third value, the target line is a center line of a right lane; when the lateral state value is a fourth value, the target line is a dynamic offset line in the current lane; when the lateral state value is a fifth value, the target line is a cross-lane dynamic offset line; when the lateral state value is a sixth value, the target line is a left safety offset line; and when the lateral state value is a seventh value, the target line is a right safety offset line.

In a preferable embodiment, the steering wheel angle calculation module 300 includes: a first calculation submodule configured to determine a preview point, calculate a distance between a point closest to the preview point in the desired trajectory and the preview point, and take the distance as a preview error; and a second calculation submodule configured to determine a transfer function relationship between the preview error and a steering wheel angle, and calculate the target steering wheel angle corresponding to the current preview error according to the transfer function relationship.

In a preferable embodiment, the second calculation submodule determines the transfer function relationship between the preview error and the steering wheel angle according to a vehicle dynamics model, a motion law, a preview distance and a speed of the autonomous vehicle.

In a preferable embodiment, the device for controlling abnormal lane change of the vehicle may further include: a steering wheel angle correction module 500 configured to obtain a heading angle deviation between a current heading angle and a target heading angle of the autonomous vehicle, perform proportional-integral-derivative PID calculation on the heading angle deviation to obtain a control increment for the steering wheel angle; and correct the target steering wheel angle based on the control increment, where the corrected target steering wheel angle is required to achieve zero heading angle deviation.

For other implementation details and effects of the embodiments of the present disclosure, reference may also be made to the foregoing embodiment of the method for controlling abnormal lane change of the vehicle, which will not be repeated here.

A machine-readable storage medium is further provided by another embodiment of the present disclosure. The machine-readable storage medium has instructions stored thereon, and the instructions enable the machine to execute the above method for controlling abnormal lane change of the vehicle. The machine-readable storage medium includes, but not limited to, phase change memory (PRAM), static random access memory (SRAM), dynamic random access memory (DRAM), other types of random access memory (RAM), read-only memory (ROM), electrically erasable programmable read-only memory (EEPROM), flash memory (Flash Memory) or other memory technologies, CD-ROM, digital versatile disc (DVD) or other optical storage, magnetic cassette tape, magnetic tape magnetic disk storage or other magnetic storage device, and other various medium that can store program codes.

A processor is further provided by another embodiment of the present disclosure, which is configured to run a program, and execute the method for controlling abnormal lane change of the vehicle in the above embodiments when running the program.

Figure 8 is a structure diagram of a system for controlling abnormal lane change of a vehicle according to another embodiment of the present disclosure. The system for controlling abnormal lane change of the vehicle includes: a collection device 810 configured to collect lane line information and vehicle surrounding information; the above machine-readable storage medium (which is not illustrated in the drawing); and a processor 820 configured to obtain the lane line information and the vehicle surrounding information from the collection device 810, determine whether the autonomous vehicle is in an abnormal lane changing state according to the lane line information and the vehicle surrounding information, and execute the instructions stored in the machine-readable storage medium according to a determination result.

The collection device 810 is a device that provides real-time lane line information and surrounding environment information of the vehicle when the vehicle in abnormal lane changing state. The collection device is preferably a device capable of detecting and extracting an object that appear within a 360° range around the autonomous vehicle, for example, an all-weather sensor detection equipment, which can not only meet detection requirements, but also avoid false detection and missed detection of objects caused by rain, snow, fog, and light. The collection device 810 according to the embodiments of the present disclosure is not limited to a current installation position or a current number. In order to improve accuracy of object detection, several radar sensors (laser radar or millimeter wave radar equipment) and vision sensors are arranged around the vehicle body to improve the accuracy and stability of object detection through device redundancy. It should be noted that a camera may include an optical system and an image processing system to achieve accurate extraction of lane line information and vehicle surrounding information, and after obtaining accurate information, the information can be provided to the processor 820 for lane change control.

The processor 820 can be an electronic control unit (ECU) of the vehicle, or it can be an independently configured conventional controller, such as central processing unit (CPU), single-chip microcomputer, digital signal processor (DSP), system on a chip (SOC). It is understandable that these independent controllers can also be integrated into the ECU. The processor 820 is preferably implemented with a controller with fast calculation speed and wealthy input/output (I/O) ports which are required to include an I/O port that can perform controller area network (CAN) communicate with the entire vehicle, an I/O port for switching signals, and a network cable interface.

In a preferred embodiment, the processor 820 may be a processor involved in the foregoing embodiment, which is configured to run a program and execute the method for controlling abnormal lane change of the vehicle of the foregoing embodiments when running the program. In this case, the system for controlling abnormal lane change of the vehicle may not additionally include the machine-readable storage medium.

In a preferred embodiment, the system for controlling abnormal lane change of the vehicle may further include a speed-related system that can provide vehicle speed information, for example, antilock brake system (ABS), electric power steering (EPS) system or the like, so that vehicle speed information can be obtained from the speed-related system to perform parameter tuning of the fuzzy PID controller mentioned above. It should be noted that the speed-related system here may not be included in the system for controlling abnormal lane change of the vehicle; instead, the speed-related system communicates with the system for controlling abnormal lane change of the vehicle through CAN communication to facilitate the obtaining of the vehicle speed information.

The system for controlling abnormal lane change of the vehicle according to another embodiment of the present disclosure may include: the collection device 810 configured to collect lane line information and vehicle surrounding information; and the device for controlling abnormal lane change of the vehicle described in the foregoing embodiments.

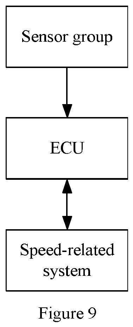

Figure 9 is a schematic communication diagram of the system for controlling abnormal lane change of the vehicle according to an embodiment of the present disclosure. The system for controlling abnormal lane change of the vehicle includes three parts: a sensor group (corresponding to the aforementioned collection device 810), an ECU (corresponding to the aforementioned processor 820), and a speed-related system. The sensor group provides lane line information and object information required in a detection area for the autonomous vehicle in real-time, including object lateral and longitudinal distances, a lane line type, a lane line width, lane line credibility and other relevant output information, and outputs real-time relevant information to the ECU for processing through CAN communication. The ECU adopts CPU configuration and has readable storage media such as ROM, RAM, and Flash Memory. These readable storage media store the algorithm program for the above-mentioned method for controlling abnormal lane change. The speed-related system may be, for example, ABS and EPS. ABS can communicates with ECU through AD-CAN communication, and EPS can communicate with ECU through PT-CAN communication. In this way, the various parts of the system for controlling abnormal lane change of the vehicle communicate and interact with various CANs, and respond to lane line changes in real time according to a control signal output by the ECU and the vehicle speed information, so that the entire automatic driving system forms a closed-loop control and adjusts a vehicle posture in real time to make the vehicle drive along the target line.

The embodiments described hereinabove are only preferred embodiments of the present application, and are not intended to limit the scope of the present application. Any modification, equivalent replacement, and improvement made within the spirit and principle of the present disclosure shall fall in the protection scope of the present application.

**Claims**

1. A method for controlling abnormal lane change of a vehicle, **characterized in** comprising:

    obtaining a current lateral state value of an autonomous vehicle and a target line to which the autonomous vehicle will move according to the current lateral state value, wherein each lateral state value is pre-configured to correspond to a different target line;

determining a desired trajectory for the autonomous vehicle according to the target line;

performing preview tracking control on the autonomous vehicle based on the desired trajectory to obtain a target steering wheel angle, wherein the target steering wheel angle is required to minimize an error between an actual driving trajectory of the autonomous vehicle and the desired trajectory; and

controlling the autonomous vehicle to perform abnormal lane change according to the target steering wheel angle.

2. The method for controlling abnormal lane change of the vehicle according to claim 1, wherein cases that each lateral state value is pre-configured to correspond to a different target line comprise:

   when the lateral state value is a first value, the target line is a center line of a current lane;
   when the lateral state value is a second value, the target line is a center line of a left lane;
   when the lateral state value is a third value, the target line is a center line of a right lane;
   when the lateral state value is a fourth value, the target line is a dynamic offset line in the current lane;
   when the lateral state value is a fifth value, the target line is a cross-lane dynamic offset line;
   when the lateral state value is a sixth value, the target line is a left safety offset line; and
   when the lateral state value is a seventh value, the target line is a right safety offset line.

3. The method for controlling abnormal lane change of the vehicle according to claim 1, wherein the performing preview tracking control on the autonomous vehicle based on the desired trajectory to obtain the target steering wheel angle comprises:

   determining a preview point;
   calculating a distance between a point closest to the preview point in the desired trajectory and the preview point, and taking the distance as a preview error;
   determining a transfer function relationship between the preview error and a steering wheel angle; and
   calculating the target steering wheel angle corresponding to the current preview error according to the transfer function relationship.

4. The method for controlling abnormal lane change of the vehicle according to claim 3, wherein the determining the transfer function relationship between the preview error and the steering wheel angle comprises:
   determining the transfer function relationship between the preview error and the steering wheel angle according to a vehicle dynamics model, a motion law, a preview distance and a speed of the autonomous vehicle.

5. The method for controlling abnormal lane change of the vehicle according to any one of claims 1 to 4, wherein before controlling the autonomous vehicle to perform abnormal lane change according to the target steering wheel angle, the method for controlling abnormal lane change of the vehicle further comprises:

   obtaining a heading angle deviation between a current heading angle and a target heading angle of the autonomous vehicle;
   performing proportional-integral-derivative PID calculation on the heading angle deviation to obtain a control increment for the steering wheel angle; and
   correcting the target steering wheel angle based on the control increment, wherein the corrected target steering wheel angle is required to achieve zero heading angle deviation.

6. A device for controlling abnormal lane change of a vehicle, **characterized in** comprising:

   a target line obtaining module configured to obtain a current lateral state value of an autonomous vehicle and a target line to which the autonomous vehicle will move according to the current lateral state value, wherein each lateral state value is pre-configured to correspond to a different target line;
   a desired trajectory determination module configured to determine a desired trajectory of the autonomous vehicle according to the target line;
   a steering wheel angle calculation module configured to perform preview tracking control on the autonomous vehicle based on the desired trajectory to obtain a target steering wheel angle, wherein the target steering wheel angle is required to minimize an error between an actual driving trajectory of the autonomous vehicle and the desired trajectory; and
   a control module configured to control the autonomous vehicle to perform abnormal lane change according to the target steering wheel angle.

7. The device for controlling abnormal lane change of the vehicle according to claim 6, wherein cases that each lateral state value is pre-configured to correspond to a different target line comprise:

when the lateral state value is a first value, the target line is a center line of a current lane;
when the lateral state value is a second value, the target line is a center line of a left lane;
when the lateral state value is a third value, the target line is a center line of a right lane;
when the lateral state value is a fourth value, the target line is a dynamic offset line in the current lane;
when the lateral state value is a fifth value, the target line is a cross-lane dynamic offset line;
when the lateral state value is a sixth value, the target line is a left safety offset line; and
when the lateral state value is a seventh value, the target line is a right safety offset line.

8. The device for controlling abnormal lane change of the vehicle according to claim 6, wherein the steering wheel angle calculation module comprises:

a first calculation submodule configured to determine a preview point, calculate a distance between a point closest to the preview point in the desired trajectory and the preview point, and take the distance as a preview error; and
a second calculation submodule configured to determine a transfer function relationship between the preview error and a steering wheel angle, and calculate the target steering wheel angle corresponding to the current preview error according to the transfer function relationship.

9. The device for controlling abnormal lane change of the vehicle according to claim 8, wherein the second calculation submodule is configured to determine the transfer function relationship between the preview error and the steering wheel angle according to a vehicle dynamics model, a motion law, a preview distance and a speed of the autonomous vehicle.

10. The device for controlling abnormal lane change of the vehicle according to any one of claims 6 to 9, wherein the device for controlling abnormal lane change of the vehicle further comprises:
a steering wheel angle correction module configured to obtain a heading angle deviation between a current heading angle and a target heading angle of the autonomous vehicle, perform proportional-integral-derivative PID calculation on the heading angle deviation to obtain a control increment for the steering wheel angle, and correct the target steering wheel angle based on the control increment, wherein the corrected target steering wheel angle is required to achieve zero heading angle deviation.

11. A machine-readable storage medium having instructions stored thereon, wherein the instructions enable a machine to execute the method for controlling abnormal lane change of the vehicle according to any one of claims 1 to 5.

12. A processor configured for running a program, **characterized in that** the processor is configured to, when running the program, execute the method for controlling abnormal lane change of the vehicle according to any one of claims 1 to 5.

13. A system for controlling abnormal lane change of a vehicle, **characterized in** comprising:

a collection device configured to collect lane line information and vehicle surrounding information; and
the device for controlling abnormal lane change of the vehicle according to any one of claims 6 to 10 or a processor;
wherein the device for controlling abnormal lane change of the vehicle or the processor is configured to obtain the lane line information and the vehicle surrounding information from the collection device, determine whether the autonomous vehicle is in an abnormal lane changing state according to the lane line information and the vehicle surrounding information, and perform control of abnormal lane change of the vehicle according to a determination result.

14. The system for controlling abnormal lane change of the vehicle according to claim 13, wherein the processor is configured as the processor according to claim 12, or the processor is configured to execute the instructions stored on the machine-readable storage medium according to claim 11.

S110

Obtain a current lateral state value of an autonomous vehicle and a target line to which the autonomous vehicle will move according to the current lateral state value

S120

Determine a desired trajectory of the autonomous vehicle according to the target line

S130

Perform preview tracking control on the autonomous vehicle based on the desired trajectory to obtain a target steering wheel angle

S140

Control the autonomous vehicle to perform abnormal lane change according to the target steering wheel angle

Figure 1

Moving vehicle

Present vehicle

Obstacle or road repair

Ramp

Figure 2

S131

Determine a preview point

S132

Calculate a distance between a point closest to the preview point in the desired trajectory and the preview point, and take the distance as a preview error

S133

Determine a transfer function relationship between the preview error and a steering wheel angle

Figure 3

Figure 4

Figure 5

Figure 6

| | |
|---|---|
| Target line obtaining module | — 100 |
| Desired trajectory determination module | — 200 |
| Steering wheel angle calculation module | — 300 |
| Control module | — 400 |
| Steering wheel angle correction module | — 500 |

Figure 7

Detection area

820

810

Figure 8

Sensor group

ECU

Speed-related system

Figure 9

## INTERNATIONAL SEARCH REPORT

| International application No. |
| --- |
| **PCT/CN2020/079958** |

**A. CLASSIFICATION OF SUBJECT MATTER**

B60W 10/20(2006.01)i; B60W 30/18(2012.01)i

According to International Patent Classification (IPC) or to both national classification and IPC

**B. FIELDS SEARCHED**

Minimum documentation searched (classification system followed by classification symbols)

B60W

Documentation searched other than minimum documentation to the extent that such documents are included in the fields searched

Electronic data base consulted during the international search (name of data base and, where practicable, search terms used)

CNABS, SIPOABS, DWPI, CNTXT, CNKI: 换道, 变道, 横向, 侧向, 预瞄, 轨迹, 路径, 线路, 路线, 目标, 预期, 期望, 当前, 实际, 方向盘, 转角, 误差, 偏差, lane, chang+, traverse, lateral, preview, path, line, track, trajectory, steering, angle

**C. DOCUMENTS CONSIDERED TO BE RELEVANT**

| Category* | Citation of document, with indication, where appropriate, of the relevant passages | Relevant to claim No. |
| --- | --- | --- |
| X | CN 106915349 A (HIRAIN TECHNOLOGIES CO., LTD.) 04 July 2017 (2017-07-04) description, paragraphs [0053]-[0157], and figures 1-6 | 1-14 |
| X | CN 105329238 A (BEIJING UNIVERSITY OF AERONAUTICS AND ASTRONAUTICS) 17 February 2016 (2016-02-17) description, paragraphs [0032]-[0070], and figures 1-5 | 1-14 |
| X | US 8078373 B2 (DENG, Weiwen et al.) 13 December 2011 (2011-12-13) description, specific embodiments, and figures 1-6 | 1-14 |
| A | CN 107323450 A (GUANGZHOU AUTOMOBILE GROUP CO., LTD.) 07 November 2017 (2017-11-07) entire document | 1-14 |
| A | CN 103085815 A (BEIJING INSTITUTE OF TECHNOLOGY) 08 May 2013 (2013-05-08) entire document | 1-14 |
| A | CN 103640622 A (NANJING UNIVERSITY OF AERONAUTICS AND ASTRONAUTICS) 19 March 2014 (2014-03-19) entire document | 1-14 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **28 May 2020** | **22 June 2020** |

| Name and mailing address of the ISA/CN | Authorized officer |
| --- | --- |
| China National Intellectual Property Administration (ISA/CN) No. 6, Xitucheng Road, Jimenqiao Haidian District, Beijing 100088 China | |
| Facsimile No. **(86-10)62019451** | Telephone No. |

Form PCT/ISA/210 (second sheet) (January 2015)

## INTERNATIONAL SEARCH REPORT

International application No.

**PCT/CN2020/079958**

**C. DOCUMENTS CONSIDERED TO BE RELEVANT**

| Category* | Citation of document, with indication, where appropriate, of the relevant passages | Relevant to claim No. |
|---|---|---|
| A | US 2017233001 A1 (GM GLOBAL TECHNOLOGY OPERATIONS LLC) 17 August 2017 (2017-08-17) entire document | 1-14 |

Form PCT/ISA/210 (second sheet) (January 2015)

**INTERNATIONAL SEARCH REPORT**
Information on patent family members

International application No.

**PCT/CN2020/079958**

| Patent document cited in search report | | | Publication date (day/month/year) | Patent family member(s) | | | Publication date (day/month/year) |
|---|---|---|---|---|---|---|---|
| CN | 106915349 | A | 04 July 2017 | None | | | |
| CN | 105329238 | A | 17 February 2016 | None | | | |
| US | 8078373 | B2 | 13 December 2011 | None | | | |
| CN | 107323450 | A | 07 November 2017 | None | | | |
| CN | 103085815 | A | 08 May 2013 | None | | | |
| CN | 103640622 | A | 19 March 2014 | None | | | |
| US | 2017233001 | A1 | 17 August 2017 | CN | 107085424 | A | 22 August 2017 |
| | | | | DE | 102017201569 | A1 | 17 August 2017 |

Form PCT/ISA/210 (patent family annex) (January 2015)